# EUROPÄISCHE PATENTANMELDUNG

(11) **EP 0 959 588 A2**
(43) Veröffentlichungstag der Anmeldung: **24.11.1999**
(21) Anmeldenummer: 99440096.8
(22) Anmeldetag: 30.04.1999
(51) Int. Cl.: H04L 12/24

(54) **Netzelement mit einer Steuerungseinrichtung und Steuerungsverfahren**

(30) Priorität: 20.05.1998 DE 19822553
(71) Anmelder: ALCATEL, 75008 Paris (FR)
(72) Erfinder: Banzhaf, Monika, 70439 Stuttgart (DE)
(74) Vertreter: Rausch, Gabriele, Dr.

(57) **Zusammenfassung**

Angegeben ist ein Netzelement (NE) für ein Nachrichtennetz, insbesondere für ein synchrones digitales Nachrichtenübertragungssystem. Es hat eine Steuerungseinrichtung (CT), die einen Prozessor (CPU) zur Ausführung einer Zugriffsanforderung (REQ), einen Speicher (MEM), in dem verwaltete Objekte (MO) gespeichert sind, und eine Zugriffseinheit (ACC) zum Empfangen der Zugriffsanforderung (REQ) enthält. Die Steuerungseinrichtung steuert das Netzelement mittels der verwalteten Objekte (MO). Die verwalteten Objekte sind eine Abbildung der statischen und dynamischen Eigenschaften von Ressourcen des Netzelementes (NE). In dem Speicher (MEM) ist ein Diensteprofil (PRO) gespeichert, das Angaben über Zugriffsrechte für die verwalteten Objekt (MO) enthält. Der Prozessor (CPU) prüft vor Ausführung der Zugriffsanforderungen (REQ), ob Zugriffsrechte für zur Ausführung der Zugriffsanforderung (REQ) benötigte verwaltete Objekte (MO) vorhanden sind. Dadurch wird eine flexiblere und weniger fehleranfällige Verwaltung der Zugriffsrechte auf verwalteten Objekten ermöglicht, insbesondere in der Kommunikation zwischen verwalteten Objekten untereinander.

## Beschreibung

Die Erfindung betrifft ein Netzelement nach dem Oberbegriff des Anspruchs 1, ein Verfahren zum Steuern eines Netzelementes nach Anspruch 7 sowie eine Steuerungseinrichtung für ein Netzelement nach dem Oberbegriff des Anspruchs 9.

Unter einem Netzelement werden Einrichtungen eines Nachrichtennetzes verstanden, die beispielsweise dazu dienen, Verbindungen innerhalb des Netzes einzurichten, Zugänge zu dem Netz zu schaffen, Verbindungen in dem Netz zu vermitteln oder das Übertragungsformat von Nachrichten, die in dem Netz übertragen werden, zu verändern. In einem synchronen digitalen Nachrichtenübertragungsnetz der synchronen digitalen Hierarchie (SDH) oder des *Synchronous Optical Networks* (SONET) zählen zu den Netzelementen Crossconnects, Add/Drop-Mutliplexer und Leitungsmultiplexer.

Solche Netzelemente enthalten eine Steuerungseinrichtung zur Steuerung und Überwachung der netzelementspezifischen Funktionen. In dem Artikel "Technologie der SDH-Netzelemente: die Software-Platform" von S. Colombo et al., Elektrisches Nachrichtenwesen 4. Quartal 1993, S.322-328, ist beschrieben, daß Netzelemente nach einer objektorientierten Spezifikation arbeiten und gesteuert werden, die von internationalen Normungsgremien wie CCITT (heute ITU-T), ETSI oder ANSI, festgelegt wurde. Funktionen der Netzelemente werden in Form von verwalteten Objekten (MO - Managed Objects) beschrieben und verwirklicht.

Verwaltete Objekte sind real existierende Abbildungen - und damit Beschreibungen statischer und dynamischer Eigenschaften - von physikalischen oder virtuellen Komponenten (Ressourcen) des verwalteten Netzelementes. Entsprechend der CCITT Empfehlung X.720 (1/92) wird unter einem verwalteten Objekt eine zum Zweck des Managements bestehende Abstraktion von Datenverarbeitungs- und Datenkommunikations-Ressourcen (z.B. Protokollstatus-Automaten, Verbindungen oder Modems) verstanden.

Die Steuerungseinrichtung eine Netzelementes enthält nach dem oben genannten Artikel von S. Colombo et al.:
- eine Prozessor-Hardware aus CPU, Speicher und Dauerspeicher,
- eine Prozessor-Plattform mit OSI-Stack, Betriebssystem, Datenverwaltung, Inter-Prozeß-Kommunikation und Schutzfunktionen,
- einen Rahmen, genannt Framework, der eine allgemeine Programmierschnittstelle (API - Application Programming Interface) zur Implementierung von verwalteten Objekten (MO - Managed Objects) aufweist, sowie
- eine Reihe von Netzelementfunktionen, die durch verwaltete Objekte realisiert sind.

Das Framework enthält eine Attribut-Bibliothek, die Zugriffsdienste auf die verwalteten Objekte bietet, wie SET, GET, REPLACE, CREATE oder DELETE. Das Framework enthält weiter eine Inter-Objekt-Kommunikation, die die Kommunikation zwischen verschiedenen verwalteten Objekten regelt.

Dabei besteht der Nachteil, daß Zugriffsrechte, die regeln, welche Zugriffsdienste für die einzelnen verwalteten Objekte erlaubt sind, für jeden Einzelfall bei der Programmierung der Netzelementfunktionen berücksichtigt und in den Source-Code der Objektklassen (Applikationen) kodiert werden müssen. Dies ist aufwendig und fehleranfällig.

Aufgabe der Erfindung ist es, ein Netzelement, eine Steuerungseinrichtung für ein Netzelement und ein Verfahren zur Steuerung eines Netzelementes anzugeben, die eine flexiblere und weniger fehleranfällige Verwaltung der Zugriffsrechte von verwalteten Objekten gestatten.

Die Aufgabe wird hinsichtlich des Netzelementes gelöst durch die Merkmale des Anspruchs 1, hinsichtlich des Verfahrens durch die Merkmale des Anspruchs 7 und hinsichtlich der Steuerungseinrichtung durch die Merkmale des Anspruchs 9. Vorteilhafte Ausgestaltungen sind den abhängigen Ansprüchen zu entnehmen.

Als vorteilhaft erweist sich, daß die Regelung von Zugriffsrechten in der Kommunikation zwischen verwalteten Objekten untereinander vereinfacht ist.

Ein besonderer Vorteil der Erfindung besteht darin, daß die Funktionalität eines Netzelementes bei identischer Hardware und Software erweitert oder eingeschränkt werden kann, indem lediglich neue Diensteprofile geladen werden. Dadurch ist es möglich, bei identischer Hard- und Software eine Netzelementversion mit Standardfunktionen und eine Version mit erweiterten Funktionen zu schaffen.

Ein weiterer Vorteil der Erfindung ist, daß es mit Hilfe von Diensteprofilen möglich ist, ganze Klassen verwalteter Objekte vor einer oder mehreren Benutzergruppen zu verbergen und diese Klasse beispielsweise nur für eine bestimmte Benutzergruppe zugreifbar und damit "sichtbar" zu machen.

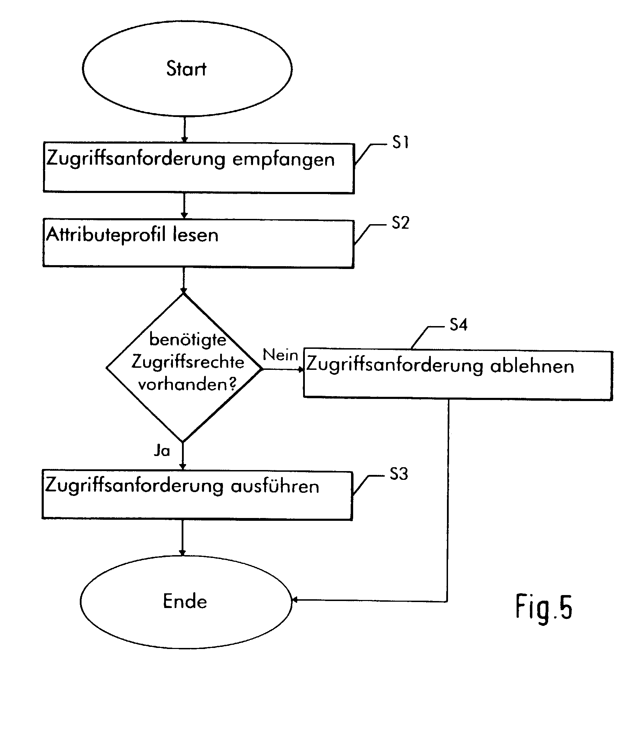

Im folgenden wird die Erfindung anhand der Figuren 1 bis 5 in zwei Ausführungsbeispielen beschrieben. Es zeigt:
- Figur 1:: ein erfindungsgemäßes Netzelement eines ersten Ausführungsbeispieles,
- Figur 2:: ein erstes Beispiel für die Arbeitsweise des erfindungsgemäßen Netzelementes in dem ersten Ausführungsbeispiel,
- Figur 3:: ein zweites Beispiel für die Arbeitsweise des erfindungsgemäßen Netzelementes in dem ersten Ausführungsbeispiel,
- Figur 4:: ein drittes Beispiel für die Arbeitsweise des erfindungsgemäßer Netzelementes in einem zweiten Ausführungsbeispiel und
- Figur 5:: ein Flußdiagram des erfindungsgemäßen Steuerungsverfahrens.

Verwaltete Objekte sind Abbildungen von physikalischen oder virtuellen Komponenten des Netzelementes, welche die statischen und dynamischen Eigenschaften der jeweiligen Komponente beschreiben. Ein verwaltetes Objekt ist eine Instanz einer Klasse verwalteter Objekte. Eine solche Klasse verwalteter Objekte ist definiert durch ihre Attribute, die von ihren Objekten ausführbaren Operationen (engl. operations), die Meldungen (engl. notifications), die ihre Objekte erzeugen können, und ihr Verhalten (engl. related behaviour). Jedes verwaltete Objekt besitzt einen eindeutigen Namen. Von Standpunkt des Managementsystems aus existiert ein verwaltetes Objekt dann, wenn es einen eindeutigen Namen hat und wenn es die Operationen und Meldungen unterstützt, die für seine Klasse definiert sind.

Die Gesamtheit der in einem Netzelement existierenden verwalteten Objekte zusammen mit deren Attributen wird als *Managed Information Base*, kurz MIB, bezeichnet und spiegelt die aktuelle Konfiguration des Netzelementes wider. Die verwalteten Objekte sind in einem Speicher (meistens ein RAM) gespeichert und in einer Datenbank, die sich auf einem Festwertspeicher (z.B. einer Festplatte) des Netzelementes befindet, redundant gesichert. Diese Datenbank wird auch mit dem englischen Ausdruck *persistency* oder *persistency database* bezeichnet.

Der Zugriff auf ein verwaltetes Objekt erfolgt in Form einer Zugriffsanforderung. Die Zugriffsanforderungen externer Benutzer, beispielsweise Abfragen des übergeordneten Managementsystems, haben eine festgelegte Struktur und Sprache, nämlich *Common Management* *Information System Element,* kurz CMISE und das Protokoll *Common Management Information Protocol,* kurz CMIP. Möglich sind auch interne Zugriffsanforderungen zwischen verwalteten Objekten untereinander.

Auf verwaltete Objekte können verschiedene Zugriffsanforderungen angewendet werden, wie dies in der CCITT Empfehlung X.720 (01/92) beschrieben ist, nämlich unter anderem:
- GET: um den Wert eines Attributes eines verwalteten Objektes zu lesen,
- SET: um einem Attribut eines verwalteten Objektes einen Wert zuzuweisen,
- ACTION: um eine Operation eines verwalteten Objektes auszuführen,
- CREATE: um ein neues verwaltetes Objekt einer angegebenen Klasse verwalteter Objekte zu erzeugen, und
- DELETE: um ein existierendes verwaltetes Objekt zu löschen.
Welche Zugriffsanforderungen an ein verwaltetes Objekt prinzipiell möglich sind, ist in der Definition seiner Objektklasse festgelegt.

Ein Grundgedanke der Erfindung besteht darin, Zugriffsrechte für verwaltete Objekte und deren Attribute im voraus festzulegen und in einem Diensteprofil zu speichern. Dazu werden Diensteprofile in Tabellenform verwendet. Soll eine Zugriffsanforderung an ein verwaltetes Objekt ausgeführt werden und der Zugriff erfolgen, so wird anhand des Diensteprofils geprüft, ob der zugreifende Benutzer das zum Zugriff nötige Zugriffsrecht hat oder nicht. Besteht das nötige Zugriffsrecht, so wird die Zugriffanforderung ausgeführt, anderenfalls wird eine Fehlermeldung erzeugt und der Zugriff abgelehnt. Eine vorteilhafte Weiterbildung der Erfindung besteht darin, verschiedene Kategorien von Benutzern zu schaffen und die Zugriffsrechte für jede Benutzerkategorie zu jedem verwalteten Objekt in Form von Diensteprofilen festzulegen.

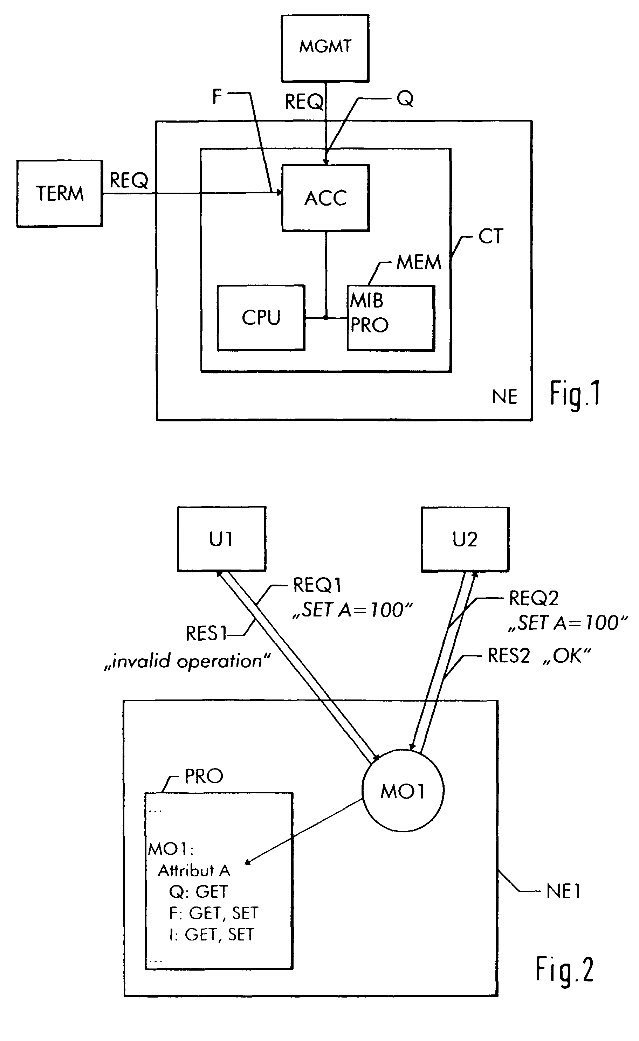

Ein erstes Ausführungsbeispiel der Erfindung ist in Figur 1 schematisch dargestellt. Ein Netzelement NE besitzt eine Steuerungseinrichtung CT mit einem Speicher MEM, einem Prozessor CPU und einer Zugriffseinheit ACC. In dem Speicher MEM ist die Management Information Base MIB gespeichert. Die MIB besteht aus einer Anzahl von verwalteten Objekten. In dem Speicher MEM ist auch ein Diensteprofil PRO abgelegt, das die Zugriffsrechte zu den verwalteten Objekten und deren Attribute enthält.

In dem ersten Ausführungsbeispiel handelt es sich bei dem Netzelement NE um einen Crossconnect für ein synchrones digitales Nachrichtenübertragungsnetz der synchronen digitalen Hierarchie. Beispiele für verwaltete Objekte des Crossconnects sind Objekte für geschaltete Verbindungen, für Endpunkte (engl. termination points) der Schaltmatrix des Crossconnects, für physikalische Baugruppen und Boards sowie für Ergebnisdateien von regelmäßigen Überwachungsvorgängen in dem Netzelement (performance monitoring).

Über die Zugriffseinheit ACC werden Zugriffsanforderungen REQ von einer externen Managemeneinrichtung MGMT in Form der oben angesprochenen CMISE-Requests empfangen. In dem Speicher ist das Diensteprofil gespeichert. Das Diensteprofil PRO enthält Angaben über Zugriffsrechte von Benutzergruppen für die verwalteten Objekte und deren Attribute. In dem ersten Ausführungsbeispiel sind zwei externe Benutzergruppen vorgesehen, nämlich Q-Schnittstellenbenutzer und F-Schnittstellenbenutzer sowie eine interen Benutzergruppe für Zugriffsanforderungen zwischen verwalteten Objekten untereinander. Für die Benutzergruppe Q-Schnittstellenbenutzer sollen alle Verwaltungsfunktionen gestattet sein, die für die Q-Schnittstelle QIF des Netzwerkmangements in den Empfehlungen für synchrone digitale Hierarchie (SDH) festgelegt sind. Die Benutzergruppe F-Schnittstellenbenutzer nutzt eine proprietär erweiterte Q-Schnittstelle des Netzelements, die als F-Schnittstelle FIF bezeichnet wird, und hat erweitertere Zugriffsrechte. Die F-Schnittstelle ist im Ausführungsbeispiel von einem lokalen Terminal TERM für Betriebspersonal benutzt. Zu der internen Benutzergruppe gehören alle verwalteten Objekte selbst.

In der Figur 2 ist ein erstes Beispiel für die Arbeitsweise des Netzelementes im ersten Ausführungsbeispiel dargestellt. Ein Benutzer U1 der Benutzergruppe Q-Schnittstellenbenutzer Q sendet über die Zugriffseinheit eine erste Zugriffsanforderung REQ1 an das Netzelement. Dabei soll auf ein erstes verwaltetes Objekt MO1 zugegriffen werden und dessen Attribut A auf einen angegebenen Wert, beispielsweise 100, gesetzt werden. Mittels des Prozessors CPU wird nun in dem Diensteprofil PRO überprüft, welche Zugriffsrecht der Benutzer U1 der Benutzergruppe Q-Schnittstellenbenutzer Q für das Attribut A des verwalteten Objektes MO1 hat: Er hat lediglich des Zugriffsrecht GET, kann also lediglich das Attribut A lesen. Da der Benutzer U1 das Zugriffsrecht SET für das Attribut A nicht hat, wird die Zugriffsanforderung verweigert und die Fehlermeldung RES1 *"invalid operation"* als Ergebnis an den Benutzer U1 zurückgesendet. Er kann also die gewünschte Zugriffsanforderung nicht ausführen.

Ein weiterer Benutzer U2 sendet ebenfalls eine Zugriffsanforderung REQ2 an das Netzelement NE1. Der zweite Benutzer U2 gehört der Benutzergruppe F-Schnittstellenbenutzer F an und will mit seiner Zugriffsanforderung ebenfalls das Attribut A des verwalteten Objektes MO1 auf 100 setzen. In dem Diensteprofil PRO ist verzeichnet, daß die Benutzergruppe F-Schnittstellenbenutzer F für das Attribut A die Zugriffsrechte GET und SET hat. Der Benutzer U2 darf also das Attribut A sowohl lesen als auch dessen Wert verändern. Da alle zur Ausführung der Zugriffsanforderung REQ2 benötigten Zugriffsrechte vorhanden sind, wird die Zugriffsanforderung REQ2 ausgeführt. Der Wert des Attributes A wird auf 100 gesetzt und als Ergebnis wird die Meldung RES2 *"OK"* an den Benutzer U2 zurückgesendet.

Anhand dieses Beispieles wird klar, wie eine Zugriffskontrolle und Beschränkung der Zugriffsrechte mit Hilfe des Diensteprofils realisiert werden kann. Ein Beispiel für eine sinnvolle Zugriffskontrolle ist das Erzeugen eines neuen verwalteteten Objektes für ein Hardwareboard des Crossconnectes. Hier kann es sinnvoll sein, der externen Managementeinrichtung das Erzeugen eines solchen verwalteten Objektes nicht zu gestatten, indem man der Benutzergruppe Q-Schnittstellenbenutzer des Zugriffsrecht CREATE für diese Objektklasse versagt, während das Erzeugen des Objektes am lokalen Terminal des Crossconnectes über die F-Schnittstelle gestattet ist, indem der Benutzergruppe F-Schnittstellenbenutzer das Zugriffsrecht CREATE eingeräumt wird. Dadurch ist gewährleistet, daß ein neues Hardwareboard nur vom Betriebspersonal vor Ort installiert und konfiguriert werden kann. Auf diese Weise können auch verschiedene Funktionalitäten für unterschiedliche Benutzergruppen realisiert werden. Die externe Managementeinrichtung wird in der Regel nicht an Hardwaredatails einzelner Netzelemente interessiert sein, während das Betriebspersonal vor Ort zum Zweck der Wartung zusätzliche Dienste am Netzelement ausführen können muß.

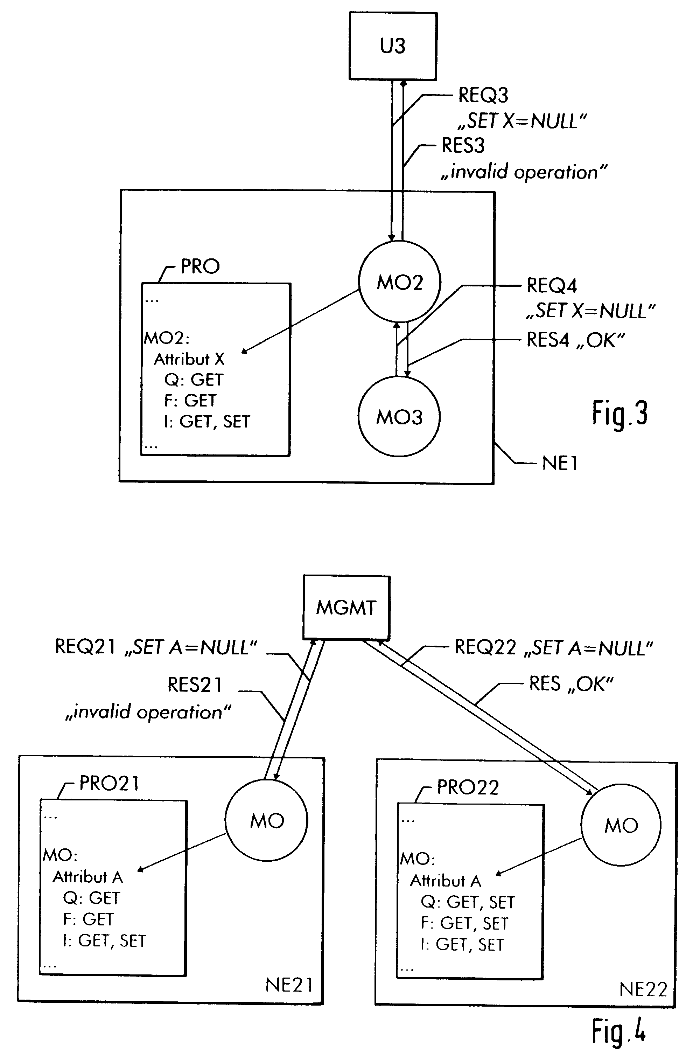

Ein zweites, in Figur 3 gezeigtes Beispiel für die Arbeitsweise des Netzelementes im ersten Ausführungsbeispiel bezieht sich auf interne Kommunikation zwischen verwalteten Objekten. Ein Benutzer U3 sendet eine Zugriffsanforderung REQ3 an das Netzelement NE1. Durch die Zugriffsanforderung REQ3 soll das Attribut X des verwalteten Objektes MO2 geändert werden. Der Benutzer U3 gehört der Benutzergruppe Q-Schnittstellenbenutzer Q an. Die Steuerungseinrichtung des Netzelementes prüft anhand des Diensteprofils PRO, welche Zugriffsrechte der Benutzer U2 hat und stellt fest, daß er für das Attribut X des verwalteten Objektes MO2 nur das Zugriffsrecht GET, nicht aber SET hat. Demnach verweigert die Steuerungseinrichtung die Ausführung der Zugriffsanforderung REQ3 und sendet die Fehlermeldung RES3 *"invalid operation*" als Ergebnis auf die Zugriffsanforderung an den Benutzer U3 zurück.

Aufgrund eines in der Steuerungseinrichtung ablaufenden Prozesses sendet ein anderes verwaltete Objekt MO3 eine interne Zugriffsanforderung REQ4 mit der ebenfalls das Attribut X des verwalteten Objektes MO2 verändert werden soll. Das verwaltete Objekt MO3 gehört der internen Benutzergruppe INT an, der systeminterne Prozeßabläufe zugeordnet sind. Entsprechend der Eintragung im Diensteprofil bestehen die Zugriffsrechte GET und SET. Die Zugriffsanforderung wird also ausgeführt, da das benötigte Zugriffsrecht SET für die intere Benutzergruppe INT vorliegt. Als Antwort RES4 wird ein "*OK*" an das anfordernde verwaltete Objekt MO3 zurückgesendet.

Aus dem zweiten Beispiel für die Arbeitsweise des Netzelementes wird ersichtlich, wie die Regelung von Zugriffsrechten in der Kommunikation zwischen verwalteten Objekten untereinander auf einfache Weise realisiert wird, ohne daß für jeden Einzelfall eine gesonderte Routine in die Inter-Objekt-Kommunikation des Frameworks der Netzelementsteuerung kodiert werden muß.

Anhand der Figur 4 wird nun in einem zweiten Ausführungsbeispiel ein drittes Beispiel für die Arbeitsweise erfindungsgemäßer Netzelemente besprochen. In dem zweiten Ausführungsbeispiel sind zwei Netzelemente NE21 und NE22 eines synchronen digitalen Nachtrichtenübertragungssystems gezeigt. Beide werden von einer Managementeinrichtung MGMT gesteuert. Bei den Netzelementen handelt es sich jeweils um Netzelemente von der in Figur 1 gezeigten Art, dabei sind beide Netzelemente NE21 und NE22 baugleich mit dem einzigen Unterschied, daß sie mit unterschiedlichen Diensteprofilen PRO21, PRO22 ausgerüstet sind.

Die Managementeinrichtung MGMT sendet zu dem ersten Netzelement NE21 eine erste Zugriffsanforderung REQ21, das Attribut A des verwalteten Objektes MO auf einen angegebenen Wert zu setzen. Die Steuerungseinrichtung des ersten Netzelementes NE21 prüft in dem Diensteprofil PRO21 die Zugriffsrechte, die für das verwaltete Objekt MO eingetragen sind, stellt fest, daß für das Attribut A des verwalteten Objekts nur das Zugriffsrecht GET, nicht jedoch SET vorhanden ist und verweigert deshalb die Ausführung der Zugriffsanforderung. Es wird eine Fehlermeldung RES21 *"invalial operation*" an die Managementeinrichtung zurückgesendet.

An das zweite Netzelement NE22 sendet die Managementeinrichtung MGMT ebenfalls eine Zugriffsanforderung REQ22, das Attribut A des verwalteten Objektes MO auf einen angegebenen Wert zu setzen. Nun prüft die Steuerungseinrichtung des zweiten Netzelementes NE22 in ihrem Diensteprofil PRO22 die Zugriffsrechte, die für das verwaltete Objekt MO eingetragen sind und stellt fest, daß für das Attribut A des verwalteten Objekts die Zugriffsrechte GET und SET eingeräumt sind. Da das benötigte Zugriffsrecht SET vorhanden ist, wird die Zugriffsanforderung ausgeführt, das Attribut A wird auf den angegebenen Wert gesetzt und als Ergebnis der Operation sendet die Steuerungseinrichtung an die Managementeinrichtung die Meldung RES22 *"OK".*

Aus dem dritten Beispiel für die Arbeitsweise eines erfindungsgemäßen Netzelementes wird ersichtlich, daß Netzelemente mit unterschiedlicher Funktionalität bei identischer Hardware und Software realisiert werden können, indem lediglich unterschiedliche Diensteprofile geladen werden. So kann eine Geräteversion mit Standardfunktionen und eine Geräteversion mit einem erweiterten oder mit einem eingeschränkten Satz von Funktionen mit der gleichen Hard- und Software realisiert werden.

Besonders vorteilhaft ist, wenn das Diensteprofil dynamisch zur Laufzeit ladbar ist, d.h. wenn es im Betrieb den Netzelementes geladen oder ersetzt werden kann. Eine Prüfung auf Zugriffsrechte findet dann immer mit dem aktuellen Diensteprofil statt, so daß die Funktionalität eines Netzelementes im Betrieb geändert, z:B. erweitert werden kann.

Ein weiterer Vorteil ergibt sich, wenn das Diensteprofil in Tabellenform vorliegt und als ASCII-Datei kodiert ist. Das Diensteprofil kann dann mit einem beliebigen Texteditor gelesen und auch verändert werden. Dadurch ist es dem Wartungspersonal möglich, den mit dem Diensteprofil eingestellten Satz möglicher Funktionen des Netzelementes zu überprüfen und zu verändern. Das Diensteprofil ließe sich durch einen Lizenzmechanismus auch gegen Änderungen schützen.

Gemäß einer vorteilhaften Weiterbildung der Erfindung ist ein eigenes Diensteprofil für jede Klasse von verwalteten Objekten vorgesehen. Dadurch brauchen nur die Diensteprofile im Speicher geladen sein, zu deren zugeordneter Klasse ein verwaltetes Objekt aktuell existiert. Die Zuordnung von verwaltetem Objekt und zugehörigem Diensteprofil erfolgt in diesem Fall über die Objektklasse, der ein verwaltetes Objekt angehört.

## Patentansprüche

1. Netzelement (NE) für ein Nachrichtennetz, mit einer Steuerungseinrichtung (CT), die einen Prozessor (CPU) zur Ausführung einer Zugriffsanforderung (REQ), einen Speicher (MEM), in dem verwaltete Objekte (MO1, MO2, MO3, MO) gespeichert sind, und eine Zugriffseinheit (ACC) zum Empfangen der Zugriffsanforderung (REQ) aufweist, bei dem die Steuerungseinrichtung das Netzelement mittels der verwalteten Objekte (MO1, MO2, MO3, MO) steuert und bei dem die verwalteten Objekte eine Abbildung der statischen und dynamischen Eigenschaften von Ressourcen des Netzelementes (NE) sind,
**dadurch gekennzeichnet,** daß
in dem Speicher (MEM) ein Diensteprofil (PRO) gespeichert ist, welches Angaben über Zugriffsrechte für die verwalteten Objekte (MO1, MO2, MO3, MO) enthält, und daß der Prozessor (CPU) vor Ausführung der Zugriffsanforderung (REQ) prüft, ob Zugriffsrechte für zur Ausführung der Zugriffsanforderung (REQ) benötigte verwaltete Objekte (MO) vorhanden sind.

2. Netzelement nach Anspruch 1, bei dem das Diensteprofil (PRO) Angaben über Zugriffsrechte von verschiedenen Benutzergruppen (Q, F, I) für die verwalteten Objekte (MO1, MO2, MO3, MO) enthält.

3. Netzelement nach Anspruch 2, bei dem das Diensteprofil (PRO) Angaben über Zugriffsrechte von mindestens einer externen Benutzergruppe (Q, F) und einer internen Benutzergruppe (I) enthält.

4. Netzelement nach Anspruch 1, bei dem zu jeder Klasse von verwalteten Objekten ein Diensteprofil gespeichert ist.

5. Netzelement nach Anspruch 1, bei dem das Diensteprofil während des Betriebs des Netzelementes dynamisch ladbar ist.

6. Netzelement nach Anspruch 1, bei dem das Diensteprofil eine ASCII-Tabelle ist.

7. Verfahren zum Steuern eines Netzelement für ein Nachrichtennetz, mit den folgenden Schritten:
- Emfangen (S1) einer Zugriffsanforderung (REQ) von einem Benutzer (U1, U2, U3, MGMT),
- Prüfen (S2), ob in einem Diensteprofil (PRO) Zugriffsrechte für zur Ausführung der Zugriffsanforderung (REQ) benötigte verwaltete Objekte (MO1, MO2, MO3, MO) für den Benutzer (U1, U2, U3, MGMT) vorhanden sind,
- Ausführen (S3) der Zugriffsanforderung (REQ) falls dies der Fall ist und Ablehnen (S4) der Zugriffsanforderung falls dies nicht der Fall ist.

8. Verfahren nach Anspruch 7, bei dem festgestellt wird, zu welcher Benutzergruppe (Q, F, I) der Benutzer (U1, U2, U3, MGMT) gehört und bei dem im Rahmen der Prüfung (S2) auf Zugriffsrechte geprüft wird, ob in dem Diensteprofil (PRO) Zugriffsrechte für die zur Ausführung der Zugriffsanforderung (REQ) benötigten verwalteten Objekte (MO) für den Benutzer (U1, U2, U3, MGMT) der festgestellten Benutzergruppe vorhanden sind

9. Steuerungseinrichtung (CT) zur Steuerung eines Netzelementes (NE) eines Nachrichtennetz mittels verwalteter Objekte (MO1, MO2, MO3, MO), wobei die verwalteten Objekte eine Abbildung der statischen und dynamischen Eigenschaften von Ressourcen des Netzelementes (NE) sind, mit einem Prozessor (CPU) zur Ausführung einer Zugriffsanforderung (REQ), einem Speicher (MEM), in dem verwaltete Objekte (MO1, MO2, MO3, MO) gespeichert sind, und einer Zugriffseinheit (ACC) zum Empfangen der Zugriffsanforderung (REQ),
**dadurch gekennzeichnet,** daß
in dem Speicher (MEM) ein Diensteprofil (PRO) gespeichert ist, welches Angaben über Zugriffsrechte für die verwalteten Objekte (MO1, MO2, MO3, MO) enthält, und daß der Prozessor (CPU) vor Ausführung der Zugriffsanforderungen (REQ) prüft, ob Zugriffsrechte für zur Ausführung der Zugriffsanforderung (REQ) benötigte verwaltete Objekte (MO1, MO2, MO3, MO) vorhanden sind.
